# EUROPÄISCHE PATENTSCHRIFT

(11) **EP 1 982 576 B1**
(45) Veröffentlichungstag und Bekanntmachung des Hinweises auf die Patenterteilung: **15.05.2013**
(21) Anmeldenummer: 08004351.6
(22) Anmeldetag: 10.03.2008
(51) Int. Cl.: A01F 15/14, B65H 69/04, B65B 13/26

(54) **Ballenpresse mit Knotereinrichtung**
Balling press with knotter
Presse à balles dotée d'un dispositif de nouage

(30) Priorität: 18.04.2007 DE 102007018560
(43) Veröffentlichungstag der Anmeldung: 22.10.2008
(73) Patentinhaber: CLAAS Selbstfahrende Erntemaschinen GmbH, 33426 Harsewinkel (DE)
(72) Erfinder: Tertilt, Werner, 33428 Marienfeld (DE)
(74) Vertreter: Heuer, Wilhelm

(56) Entgegenhaltungen:
- EP-A- 0 199 615
- FR-A- 2 653 969
- GB-A- 1 230 693

## Beschreibung

Die Erfindung betrifft eine Ballenpresse, insbesondere für landwirtschaftliches Erntegut, mit einer Knotereinrichtung, nach dem Oberbegriff des Patentanspruches 1. Eine solche Ballenpresse ist zum Beispiel aus GB 1 230 693 A bekannt.

Die bekannten Ballenpressen haben einen Presskanal, in dem ein Presskolben hin und her beweglich ist, um in den Presskanal eingeführtes Pressgut gegen einen Anschlag zu pressen, der meist durch einen fertigen, noch im Presskanal befindlichen Ballen gebildet ist. Um den fertigen Ballen zusammenzuhalten, muss dieser verschnürt werden. Zu diesem Zweck sind Knotereinrichtungen mit einfacher oder zweifacher Knotenbildung verbreitet. Bei einer Ballenpresse mit einfacher Knotenbildung befindet sich eine Halteeinrichtung, in der ein freies Ende eines Bindegarnstranges zeitweilig gehalten ist, auf einer Seite des Presskanals, eine Vorratsrolle, von der das Bindegarn abgewickelt wird, befindet sich auf einer anderen Seite des Presskanals, und der zu Beginn der Ballenbildung quer durch den Presskanal gespannte Bindegarnstrang wird im Laufe der Ballenbildung zunehmend weiter ausgelenkt, wobei er den Ballen auf drei Seiten umschlingt, bis der Ballen eine vorgegebene Länge erreicht hat. Wenn diese Länge erreicht ist, wird ein sich zwischen dem Ballen und der Vorratsrolle erstreckender Abschnitt des Bindegarnstranges von einer Bindenadel angehoben und mit Hilfe eines Knoterhakens mit dem freien Ende des Stranges verknotet. Ein freies Ende des dabei durchtrennten angehobenen Abschnitts des Bindegarnstranges wird in der Halteeinrichtung gehalten, so dass sich nach dem Verknoten wiederum ein Bindegarnstrang quer durch den Presskanal erstreckt und mit der Erzeugung des nächsten Ballens begonnen werden kann.

Da der Bindegarnstrang während der Ballenbildung an seinem freien Ende festgehalten werden muss und entsprechend dem Wachstum des Ballens nur von Seiten der Vorratsrolle aus weiteres Bindegarn zugeführt werden kann, steht der Bindegarnstrang während der gesamten Ballenbildung unter einer erheblichen Zugspannung. Für die Knotenbildung muss jedoch der sich zwischen der Halteeinrichtung und dem Ballen erstreckende Endabschnitt des Bindegarnstranges in gewissem Umfang beweglich sein. Wenn der Endabschnitt ohne Lockerung seiner Halterung an der Haltevorrichtung bewegt wird, besteht die Gefahr des Reißens; wird die Halterung an der Halteeinrichtung gelockert, so besteht die Gefahr, dass der Bindegarnstrang aus der Halteeinrichtung heraus gleitet. In beiden Fällen kann kein ordnungsgemäßer Knoten gebildet werden.

Zur Lösung dieses Problems wird in GB 1 230 693 A vorgeschlagen, eine innere Garnhalteeinrichtung auf dem Weg des Bindegarnstrangs zwischen der Knotereinrichtung und dem Pressballen vorzusehen, durch deren Betätigung eine hohe Spannung des den Ballen umschlingenden Bindegarnstrangs während des Knotens aufrecht erhalten werden kann. Diese innere Garnhalteeinrichtung umfasst in dem Presskanal eingreifende Klemmbacken. Pressgut, das zwischen die Klemmbacken eindringt, kann die Klemmung des Bindegarnstrangs in der inneren Garnhalteeinrichtung vereiteln.

Aufgabe der vorliegenden Erfindung ist, eine Ballenpresse mit Knotereinrichtung anzugeben, die die Gefahr von Bindefehlern reduziert und insbesondere sicherstellt, dass der Bindegarnstrang jederzeit durch den Spalt der inneren Halteeinrichtung verläuft und nicht etwa an einer Außenseite eines der Klemmbacken hängenbleibt.

Die Aufgabe wird erfindungsgemäß gelöst durch eine Ballenpresse mit den Merkmalen das Anspruchs 1. Die innere Garnhalteeinrichtung dient dazu, die Spannung des zu verknotenden Endabschnitts des Bindegarns niedriger zu halten als die des unmittelbar am Ballen anliegenden Abschnittes und so den Endabschnitt beim Verknoten besser und sicherer handhabbar zu machen.

Die innere Garnhalteeinrichtung ist vorzugsweise funktionsmäßig an die Knotereinrichtung gekoppelt, um den Garnstrang während des Betriebs der Knotereinrichtung zu halten, ihn im Pressbetrieb aber freizugeben, so dass der fertige Knoten aus der Knotereinrichtung abgezogen werden kann.

Die Kopplung an den Betrieb der Knotereinrichtung kann erreicht werden, indem die innere Garnhalteeinrichtung über eine Kurvenscheibe gesteuert ist, die mit einer drehangetriebenen Knoterwelle in Wirkverbindung steht. Alternativ kommt auch ein elektrischer oder hydraulischer Antrieb der Knotereinrichtung in Betracht.

Vorzugsweise kann einer der beiden Klemmbacken eine Rille aufweisen, der eine Kante des anderen Klemmbackens gegenüberliegt, so dass der sich zwischen den Klemmbacken hindurch erstreckende Bindegarnstrang in Haltestellung durch die Kante wenigstens teilweise in die Rille hineingedrückt und durch die daraus resultierende Umlenkung gebremst ist.

Um den Eintritt des Bindegarnstranges in den Spalt der inneren Halteeinrichtung weiter zu begünstigen, ist bevorzugt, dass wenn die Klemmbacken in den Bindegarnstrang freigebender Stellung sind, die Breite des Spalts zu einer offenen Seite hin zunimmt.

Die Knotereinrichtung umfasst vorzugsweise eine weitere Garnhalteeinrichtung, die zur Unterscheidung von der oben genannten inneren Garnhalteeinrichtung und, da sie weiter vom Pressballen entfernt ist als diese, hier als äußere Garnhalteeinrichtung bezeichnet wird, sowie einen Knoterhaken zum Verknoten des zwischen innerer und äußerer Garnhalteeinrichtung begrenzten Endabschnittes des Bindegarnstranges.

Zweckmäßigerweise übt die innere Garnhalteeinrichtung auf den Bindegarnstrang eine Haltekraft aus, die kleiner als die Spannung eines den Pressballen berührenden Abschnittes des Bindegarnstranges ist. So ist sichergestellt, dass der Endabschnitt des Bindegarnstranges ebenfalls unter einer nicht verschwindenden Spannung steht, die allerdings kleiner als die des den Pressballen berührenden Abschnittes ist. Die Haltekraft von innerer und äußerer Garnhalteeinrichtung gemeinsam sollte mindestens so groß sein wie die Spannung des den Pressballen berührenden Abschnittes, um ein Abrutschen des Endabschnittes auch während der Knotenbildung zuverlässig auszuschließen.

Die Erfindung ist bevorzugt auf eine Knotereinrichtung mit einfacher Knotenbildung anwendbar.

Die Beschreibung der Ausführungsbeispiele, aus der weitere Merkmale und Vorteile der Erfindung deutlich werden, nimmt Bezug auf die beigefügten Figuren. Es zeigen:
- Fig. 1: eine partielle Seitenansicht des Presskanals einer Ballenpresse;
- Fig. 2: einen schematischen Querschnitt durch einen Teil des Presskanals entlang der Ebene II in Fig. 3;
- Fig. 3: die Knotereinrichtung der Ballenpresse mit Bindenadel in angehobener Stellung;
- Fig. 4: einen Schnitt durch eine Haltezange entlang der Ebene IV in Fig. 3; und
- Fig. 5: einen Detailschnitt durch die Knoterwelle in einer zur Ebene IV parallelen Ebene, der eine die Knotereinrichtung steuernde Kurvenscheibe zeigt.

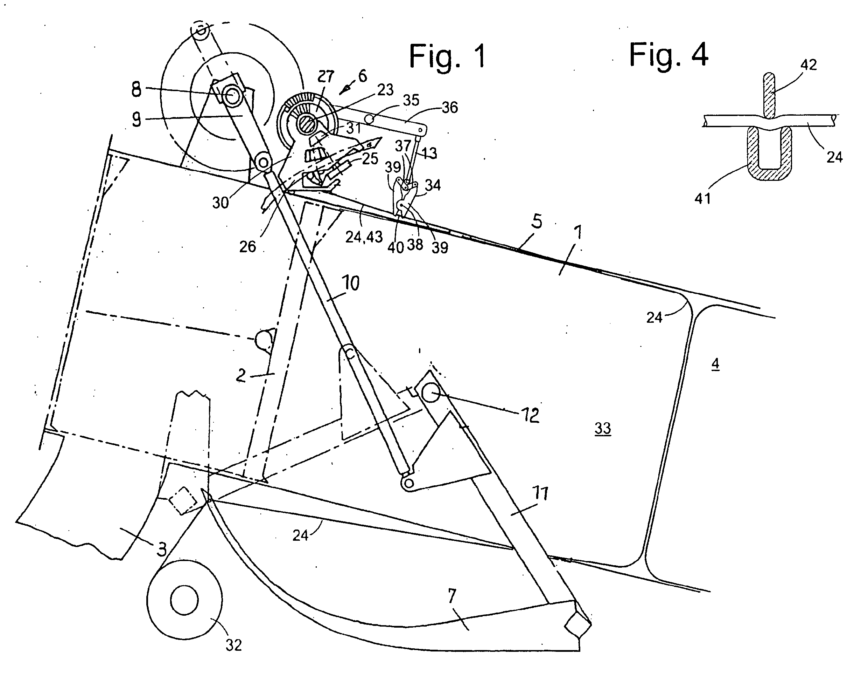

In dem in Fig. 1 teilweise dargestellten Presskanal 1 einer Ballenpresse ist ein Presskolben 2 hin und her beweglich. Über einen von unten in den Presskanal 1 mündenden Zuführkanal 3 gefördertes Erntegut wird von dem Presskolben 2 gegen eine durch einen bereits fertigen quaderförmigen Ballen 4 gebildete Wand gepresst und dabei verdichtet. Ein Bindegarnstrang 24 erstreckt sich von einer Vorratsrolle 32 aus über die Spitze einer Bindenadel 7 entlang der Unterseite eines in Bildung befindlichen Ballens 33, über dessen dem fertigen Ballen 4 zugewandte Stirnfläche und zurück entlang der Oberseite des Ballens 33 zu einer Knotereinrichtung 6.

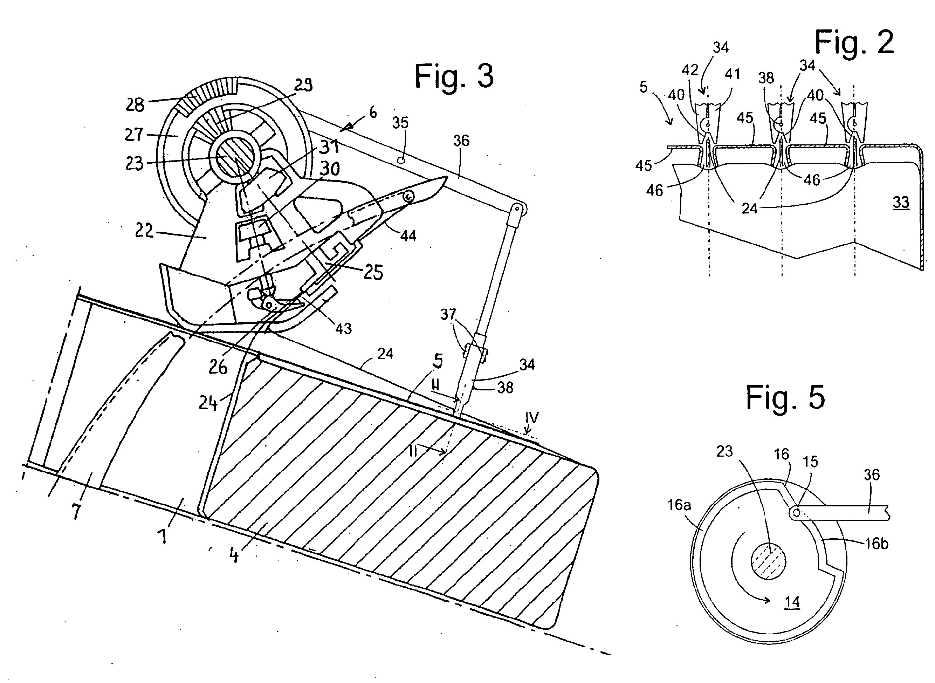

Wie in Fig. 2 zu erkennen, die einen Querschnitt durch einen Eckbereich des Presskanals 1 zeigt, sind mehrere Bindegarnstränge 24 in zur Ebene der Fig. 1 parallelen, in Fig. 2 als strichpunktierte Linien dargestellten Ebenen um den Ballen 33 herumgeschlungen, doch ist von diesen Strängen 24 und den zugehörigen Vorratsrollen 32 und Knotereinrichtungen 6 nur eine in der Fig. 1 zu sehen.

Die obere Wand 5 und die untere Wand des Presskanals 1 sind aus einer Mehrzahl paralleler, sich in Längsrichtung des Presskanals 1 erstreckender Profilelemente 45 zusammengefügt, wobei die Bindegarnstränge 24 jeweils durch Spalte 46 zwischen benachbarten Profilelementen 45 verlaufen.

Sowohl die Bindenadeln 7 als auch die Knotereinrichtungen 6 werden über eine Vorgelegewelle 8 angetrieben, die an einen nicht dargestellten Hauptantrieb der Ballenpresse ankuppelbar ist.

Der Antrieb der Bindenadeln 7 erfolgt über einen auf der Vorgelegewelle 8 angeordneten Kurbelarm 9, der die Drehbewegung der Vorgelegewelle 8 auf eine Zugstange 10 überträgt. Das Ende der Zugstange 10 ist mit einer Nadelschwinge 11 verbunden, die auf einer Achse 12 schwenkbar gelagert ist. Am freien Ende der Nadelschwinge 11 sind die Bindenadeln 7 befestigt.

Die Knotereinrichtungen 6 sind an die Vorgelegewelle 8 über eine Knoterwelle 23 gekoppelt. Ein freies Ende des Bindegarnstranges 24 ist an einem Garnklemmrad 25 jeder Knotereinrichtung 6 geklemmt. Das Garnklemmrad 25 ist drehfest mit einem Ritzel 31 verbunden, welches mit einem Zahnsegment 29 (siehe Fig. 2) einer an der Knoterwelle 23 drehfest montierten Antriebsscheibe 27 kämmt. Ein an sich bekannter Knoterschnabel 26 der Knotereinrichtung 6 ist über ein weiteres Ritzel 30 an ein Zahnsegment 28 der Antriebsscheibe 27 gekoppelt. Beide Zahnsegmente 28, 29 erstrecken sich jeweils nur über einen Teil des Umfangs der Antriebsscheibe 27, so dass die Ritzel 30, 31 nur auf einem Teil der Drehung der Knoterwelle 23 drehangetrieben sind.

Jeder Knotereinrichtung 6 ist eine Haltezange 34 zugeordnet, die über einen um eine Achse 35 schwenkbaren zweiarmigen Hebel 36 an eine Rolle gekoppelt ist, die eine mit Bezug auf Fig. 5 später genauer beschriebene Kurvenscheibe abtastet, die wie die Antriebsscheibe 27 auf der Knoterwelle 23 drehfest montiert ist. Die Haltezange 34 ist in Fig. 1 in einer zu ihrer tatsächlichen Stellung um 90° verdrehten Stellung gezeigt, um ihre Struktur mit zwei über Laschen 37 angetriebenen, um eine ortsfeste Achse 38 schwenkbaren Armen 39 besser zeigen zu können.

Von den unteren Bereichen der Arme 39 gebildete Klemmbacken begrenzen einen dreieckigen oder trapezförmigen, sich zu einem Spalt 46 des Presskanals 1 hin verbreiternden Spalt 40, durch den sich der Bindegarnstrang 24 erstreckt.

In der in Fig. 1 gezeigten Konfiguration ist die Haltezange 34 offen. Die Haltekraft des Garnklemmrades 25 ist allein ausreichend, um den Bindegarnstrang 24 zu halten, d.h. die Spannung des Bindegarnstrangs 24 übersteigt nicht die Haftreibung des Garnklemmrades 25.

Wenn der in Bildung befindliche Ballen 33 eine vorgegebene Länge erreicht hat, wird die Vorgelegewelle 8 durch Schließen einer Kupplung zum Hauptantrieb in Drehung versetzt, um die Bindenadel 7 mit dem durchgezogenen Bindegarnstrang 24 in eine der Knotereinrichtung 6 benachbarte Stellung anzuheben. Die Bindenadel 7 ist in dieser angehobenen Stellung in Fig. 1 partiell als gestrichelter Umriss sowie in Fig. 3 dargestellt. Kurz bevor die Bindenadel 7 die angehobene Stellung erreicht, schließt die Haltezange 34 und klemmt den Bindegarnstrang 24 zwischen ihren zwei Klemmbacken ein.

Fig. 4 zeigt diesen Sachverhalt anhand eines zum Bindegarnstrang 24 parallelen Schnittes durch die beiden mit 41 bzw. 42 bezeichneten Klemmbacken. Der Klemmbacken 41 hat einen U-förmigen Querschnitt, und der plattenförmige Klemmbacken 42 hält den Bindegarnstrang 24 ein Stück weit in die Nut des U-Querschnitts hineingedrückt. Die daraus resultierende Verformung des Bindegarnstranges 24 gewährleistet eine hohe Haltekraft in Längsrichtung des Stranges 24 bei geringer in Querrichtung auf ihn ausgeübter Klemmkraft, so dass die Gefahr eines Garnrisses an der Haltezange 34 durch Quetschwirkung der Haltezange 34 gering ist. Auf diese Weise verringert die Haltezange 34 einen sich zwischen ihr und dem Garnklemmrad 25 erstreckenden Abschnitt 43 des Bindegarnstranges von der Zugspannung, welcher der Bindegarnstrang 24 auf der Oberseite des Ballens 33 ausgesetzt ist, ohne jedoch den Abschnitt 43 vollständig spannungsfrei zu machen.

Die Haltekraft, die die Haltezange 34 in einer gegebenen Stellung auf den Bindegarnstrang 23 ausübt, ist von dessen Beschaffenheit, insbesondere seiner Dicke und Steifigkeit, abhängig. Zur Anpassung an unterschiedlich beschaffene Bindegarne kann die Haltezange 34 justierbar sein, z.B. indem eine Zugstange 13, die die Laschen 37 der Haltezange 34 mit dem Hebel 36 verbindet, längenverstellbar gemacht ist.

Die Bewegung der Haltezange 34 ist gesteuert durch eine auf der Knoterwelle 23 montierte Kurvenscheibe 14, die in der Darstellung der Fig. 1 hinter der Antriebsscheibe 27 verborgen und in Fig. 5 dargestellt ist. Eine von dem Hebel 36 getragene Rolle 15 greift in eine umlaufende Nut 16 der Kurvenscheibe 14 ein, die zwei kreisbogenförmige Abschnitte 16a, 16b mit verschiedenen Radien umfasst. Wenn sich die Rolle 15 in dem Abschnitt 16a mit größerem Radius befindet, ist die Haltezange 34 offen; in der in Fig. 5 gezeigten Konfiguration hat die Rolle 15 soeben (die Kurvenscheibe rotiert im Gegenuhrzeigersinn) den Abschnitt 16b erreicht, in der die Haltezange 34 geschlossen ist.

Einer nicht gezeichneten Abwandlung zufolge kann die Nut 16 in die Antriebsscheibe 27 integriert sein, z.B. an einer in der Perspektive von Fig. 1 und 3 vom Betrachter abgewandten Seite der Antriebsscheibe 27. So fungiert die Antriebsscheibe 27 gleichzeitig als Kurvenscheibe 14.

Wenn die Bindenadel 7 die in Fig. 3 dargestellte angehobene Position erreicht hat, in der die Haltezange 34 geschlossen ist, befinden sich sowohl der Abschnitt 43 als auch ein um die Bindenadel 7 herum geschlungener Abschnitt 44 des Bindegarnstranges 24 in Reichweite des Knoterschnabels 26. Durch die Drehung der Knoterwelle 23 gelangen zu diesem Zeitpunkt die Zahnsegmente 28, 29 der Antriebsscheibe 27 in Eingriff mit den Ritzeln 30, 31 und treiben eine Bewegung des Knoterschnabels 26 in an sich bekannter Weise zum Verknoten der Abschnitte 43, 44 sowie eine 180°-Drehung des Garnklemmrades 25 an.

Durch diese Drehung wird das freie Ende des Bindegarnstranges 24 kontrolliert auf den Knoterschnabel 26 zu bewegt, so dass dieser den Abschnitt 43 in für die Knotenbildung erforderlicher Weise krümmen kann. In dieser Phase ist das freie Ende des Bindegarnstrangs 24 an dem Garnklemmrad 25 nicht wie während des Pressens durch Haftreibung gehalten, sondern lediglich durch Gleitreibung, die schwächer als die Haftreibung ist.

Da dabei die Klemmung des freien Endes des Garnstranges 24 am Klemmrad 25 vor der rings um den Ballen 33 herrschenden hohen Spannung durch die geschlossene Haltezange 34 abgeschirmt ist, ist die Gefahr, dass das freie Ende während der Knotenbildung den Halt am Klemmrad 25 verliert, verringert. Der Bindegarnstrang 24 wird daher während der Knotenbildung nur so weit vom Klemmrad 25 abgezogen, wie erforderlich, damit der Knoterschnabel 26 die erforderlichen Bewegungen durchführen kann.

Das Klemmrad 25 ist mit einer Klinge versehen, die im Zusammenhang mit der Knotenbildung den Bindegarnstrang 24 im Abschnitt 44 durchtrennt; das dabei erhaltene freie Ende wird am Garnklemmrad 25 wieder geklemmt.

Nachdem die Zahnsegmente 28, 29 die Ritzel 30, 31 passiert haben, die Knotenbildung beendet und der Bindegarnstrang 24 durchtrennt ist, hat die Rolle 15 den Abschnitt 16b durchlaufen und erreicht wieder den Abschnitt 16a. Infolgedessen öffnet die Haltezange 34 und gibt den Bindegarnstrang 24 wieder frei. Damit ist der Ballen 33 fertig. Im Laufe einer Rückkehrbewegung der Bindenadel 7 in die in Fig. 1 gezeigte Stellung wird ein neuer Bindegarnstrang 24 von der Knotereinrichtung 6 aus quer durch den Presskanal 1 gezogen. Damit kann die Produktion eines neuen Ballens beginnen.

### Bezugszeichen

- 1: Presskanal
- 2: Presskolben
- 3: Zuführkanal
- 4: Ballen
- 5: Obere Wand
- 6: Knotereinrichtung
- 7: Bindenadel
- 8: Vorgelegewelle
- 9: Kurbelarm
- 10: Zugstange
- 11: Achse
- 12: Nadelschwinge
- 13: Zugstange
- 14: Kurvenscheibe
- 15: Rolle
- 16: Nut
- 16a,b: Abschnitt
- 22: Rahmen
- 23: Knoterwelle
- 24: Bindegarnstrang
- 25: Garnklemmrad
- 26: Knoterschnabel
- 27: Antriebsscheibe
- 28: Zahnsegment
- 29: Zahnsegment
- 30: Ritzel
- 31: Ritzel
- 32: Vorratsrolle
- 33: Ballen
- 34: Haltezange
- 35: Achse
- 36: Hebel
- 37: Lasche
- 38: Achse
- 39: Arm
- 40: Spalt
- 41: Klemmbacken
- 42: Klemmbacken
- 43: Abschnitt
- 44: Abschnitt
- 45: Profilelement
- 46: Spalt

## Patentansprüche

1. Ballenpresse, insbesondere für landwirtschaftliches Erntegut, mit einem Presskanal (1) zum Formen eines Pressballens (33) darin, einer am Presskanal (1) angeordneten Knotereinrichtung (6) zum Verknoten zweier Endabschnitte (43, 44) eines um den Pressballen (33) herum gelegten Bindegarnstrangs (24) und einer inneren Garnhalteeinrichtung (34), die auf dem Weg des Bindegarnstrangs (24) zwischen der Knotereinrichtung (6) und dem Pressballen (33) angeordnet ist, wobei zwei Klemmbacken (41, 42) der Garnhalteeinrichtung (34) einen Spalt (40) begrenzen, durch den eine von dem um den Pressballen (33) herum gelegten Bindegarnstrang (24) definierte Ebene verläuft, **dadurch gekennzeichnet, dass** die innere Garnhalteeinrichtung (34) außerhalb des Presskanals (1) angebracht ist, und dass ein Spalt (46) des Presskanals (1), durch den sich der Bindegarnstrang (24) vom Pressballen (33) zur Knotereinrichtung (6) erstreckt, enger als der Spalt (40) der inneren Garnhalteeinrichtung (34) in der den Bindegarnstrang (24) freigebenden Stellung ist.

2. Ballenpresse nach Anspruch 1, **dadurch gekennzeichnet, dass** die innere Garnhalteeinrichtung (34) funktionsmäßig an die Knotereinrichtung (6) gekoppelt ist, um den Garnstrang (24) während des Betriebs der Knotereinrichtung (6) zu halten und im Pressbetrieb freizugeben.

3. Ballenpresse nach einem der vorhergehenden Ansprüche, **dadurch gekennzeichnet, dass** die innere Garnhalteeinrichtung (34) über eine mit einer Knoterwelle (23) wirkverbundene Kurvenscheibe (14) gesteuert ist.

4. Ballenpresse nach einem der vorhergehenden Ansprüche, **dadurch gekennzeichnet, dass** einer der beiden Klemmbacken (41) eine Rille aufweist, der eine Kante des anderen Klemmbackens (42) gegenüberliegt.

5. Ballenpresse nach einem der vorhergehenden Ansprüche, **dadurch gekennzeichnet, dass** wenn die Klemmbacken (41, 42) in den Bindegarnstrang (24) freigebender Stellung sind, die Breite des Spalts (40) zu einer offenen Seite hin zunimmt.

6. Ballenpresse nach einem der vorhergehenden Ansprüche, **dadurch gekennzeichnet, dass** die Knotereinrichtung (6) eine äußere Garnhalteeinrichtung (25) und einen Knoterhaken (26) zum Verknoten des zwischen innerer und äußerer Garnhalteeinrichtung (34, 25) begrenzten Endabschnitts (43) umfasst.

7. Ballenpresse nach Anspruch 6, **dadurch gekennzeichnet, dass** die innere Garnhalteeinrichtung (34) eingerichtet ist, auf den Bindegarnstrang (24) eine Haltekraft auszuüben, die kleiner als die Spannung eines den Pressballen (33) berührenden Abschnitts des Bindegarnstrangs (24) ist.

8. Ballenpresse nach Anspruch 7, **dadurch gekennzeichnet, dass** die innere und die äußere Garnhalteeinrichtung (34, 25) gemeinsam eingerichtet sind, gemeinsam auf den Bindegarnstrang (24) eine Haltekraft auszuüben, die mindestens so groß wie die Spannung des den Pressballen (33) berührenden Abschnitts des Bindegarnstrangs (24) ist.

9. Ballenpresse nach einem der vorhergehenden Ansprüche, **dadurch gekennzeichnet, dass** die Knotereinrichtung (6) für einfache Knotenbildung ausgelegt ist.

## Claims

1. Baling press, in particular for harvested agricultural crops, having a compression passage (1) for forming a compressed bale (33) therein, having a knotting arrangement (6), arranged on the compression passage (1), for knotting together two end portions (43, 44) of a length (24) of binding twine placed around the compressed bale (33), and having an inner twine-gripping arrangement (34) which is arranged along the path followed by the length (24) of binding twine between the knotting arrangement (6) and the compressed bale (33), two clamping jaws (41, 42) of the twine-gripping arrangement (34) defining a gap (40) through which a plane defined by the length (24) of binding twine placed around the compressed bale (33) extends, **characterised in that** the inner twine-gripping arrangement (34) is mounted outside the compression passage (1), and **in that** a gap (46) in the compression passage (1) through which the length (24) of binding twine extends from the compressed bale (33) to the knotting arrangement (6) is narrower than the gap (40) in the inner twine-gripping arrangement (34) when the latter is in the position where it releases the length (24) of binding twine.

2. Baling press according to claim 1, **characterised in that** the inner twine-gripping arrangement (34) is functionally coupled to the knotting arrangement (6) to grip the length (24) of twine while the knotting arrangement (6) is operating and release it during the compression operation.

3. Baling press according to either of the preceding claims, **characterised in that** the inner twine-gripping arrangement (34) is controlled by a cam disc (14) operatively connected to a knotter shaft (23).

4. Baling press according to one of the preceding claims, **characterised in that** one (41) of the two clamping jaws has a groove which is situated opposite an edge of the other clamping jaw (42).

5. Baling press according to one of the preceding claims, **characterised in that**, when the clamping jaws (41, 42) are in the position in which the length (24) of binding twine is released, the width of the gap (40) increases towards an open end.

6. Baling press according to one of the preceding claims, **characterised in that** the knotting arrangement (6) comprises an outer twine-gripping arrangement (25) and a knotting hook (26) for knotting that end portion (43) which is defined between the inner and outer twine-gripping arrangements (34, 25).

7. Baling press according to claim 6, **characterised in that** the inner twine-gripping arrangement (34) is set up to exert on the length (24) of binding twine a gripping force which is less than the tension on a portion of the length (24) of binding twine, which portion is in contact with the compressed bale (33).

8. Baling press according to claim 7, **characterised in that** the inner and outer twine-gripping arrangements (34, 25) are together set up to together exert on the length (24) of binding twine a gripping force which is at least as great as the tension on the portion of the length (24) of binding twine which is in contact with the compressed bale (33).

9. Baling press according to one of the preceding claims, **characterised in that** the knotting arrangement (6) is designed to produce single knots.

## Revendications

1. Presse de mise en balles, en particulier pour les récoltes agricoles moissonnées, ayant un passage de compression (1) pour former une balle comprimée (33) dedans, ayant un dispositif de nouage (6), disposé sur le passage de compression (1), pour nouer ensemble deux parties d'extrémité (43, 44) d'une longueur (24) de ficelle lieuse placée autour de la balle comprimée (33), et ayant un dispositif de blocage de ficelle intérieur (34) qui est disposé le long du chemin suivi par la longueur (24) de ficelle lieuse entre le dispositif de nouage (6) et la balle comprimée (33), deux mors de serrage (41, 42) du dispositif de blocage de ficelle (34) définissant un espace (40) à travers lequel s'étend un plan défini par la longueur (24) de ficelle lieuse placée autour de la balle comprimée (33), **caractérisée en ce que** le dispositif de blocage de ficelle intérieur (34) est monté à l'extérieur du passage de compression (1), et **en ce qu'**un espace (46) dans le passage de compression (1) à travers lequel la longueur (24) de ficelle lieuse s'étend de la balle comprimée (33) au dispositif de nouage (6) est plus étroit que l'espace (40) dans le dispositif de blocage de ficelle intérieur (34) lorsque ce dernier est dans la position de déblocage de la longueur (24) de ficelle lieuse.

2. Presse de mise en balles selon la revendication 1, **caractérisée en ce que** le dispositif de blocage de ficelle intérieur (34) est accouplé fonctionnellement au dispositif de nouage (6) pour bloquer la longueur (24) de ficelle pendant que le dispositif de nouage (6) fonctionne et pour la débloquer pendant l'opération de compression.

3. Presse de mise en balles selon l'une ou l'autre des revendications précédentes, **caractérisée en ce que** le dispositif de blocage de ficelle intérieur (34) est contrôlé par un disque à came (14) relié opérativement à un arbre noueur (23).

4. Presse de mise en balles selon l'une des revendications précédentes, **caractérisée en ce qu'**un (41) des deux mors de serrage a une rainure qui est située en face d'un bord de l'autre mors de serrage (42).

5. Presse de mise en balles selon l'une des revendications précédentes, **caractérisée en ce que**, lorsque les mors de serrage (41, 42) sont dans la position de déblocage de la longueur (24) de ficelle lieuse, la largeur de l'espace (40) augmente vers une extrémité ouverte.

6. Presse de mise en balles selon l'une des revendications précédentes, **caractérisée en ce que** le dispositif de nouage (6) comprend un dispositif de blocage de ficelle extérieur (25) et un crochet de nouage (26) pour nouer cette partie d'extrémité (43) qui est définie entre les dispositifs de blocage de ficelle intérieur et extérieur (34, 25).

7. Presse de mise en balles selon la revendication 6, **caractérisée en ce que** le dispositif de blocage de ficelle intérieur (34) est réglé pour exercer sur la longueur (24) de ficelle lieuse une force de blocage qui est inférieure à la tension sur une partie de la longueur (24) de ficelle lieuse, laquelle partie est en contact avec la balle comprimée (33).

8. Presse de mise en balles selon la revendication 7, **caractérisée en ce que** les dispositifs de blocage de ficelle intérieur et extérieur (34, 25) sont tous les deux réglés pour exercer ensemble sur la longueur (24) de ficelle lieuse une force de blocage qui est au moins aussi grande que la tension sur la partie de la longueur (24) de ficelle lieuse qui est en contact avec la balle comprimée (33).

9. Presse de mise en balles selon l'une des revendications précédentes, **caractérisée en ce que** le dispositif de nouage (6) est conçu pour produire des noeuds simples.
